# EUROPÄISCHE PATENTSCHRIFT

(11) **EP 1 459 866 B1**
(45) Veröffentlichungstag und Bekanntmachung des Hinweises auf die Patenterteilung: **17.04.2013**
(21) Anmeldenummer: 04002867.2
(22) Anmeldetag: 10.02.2004
(51) Int. Cl.: B29C 47/04, B29C 47/06

(54) **Extrusionskopf sowie Extrusionsverfahren**
Extrusion die and extrusion method
Tête d'extrusion et procédé d'extrusion

(30) Priorität: 20.03.2003 DE 10312522
(43) Veröffentlichungstag der Anmeldung: 22.09.2004
(73) Patentinhaber: Kautex Maschinenbau GmbH, 53229 Bonn (DE)
(72) Erfinder: Balzer, Martin, 53757 Sankt Augustin (DE); Döhmen, Willi, 41065 Mönchengladbach (DE); Eckerskorn, Heinz-Werner, 53819 Neunkirchen-Seelscheid (DE); Forst, Lutz, 53773 Hennef (DE); Klüsener, Peter, 53179 Bonn (DE); Stehr, Roger, 40599 Düsseldorf (DE); Pappert, Michael, 53783 Eitorf (DE)
(74) Vertreter: Polypatent

(56) Entgegenhaltungen:
- EP-A- 0 491 093
- EP-A- 0 575 039
- WO-A-98/08668
- WO-A-02/085602
- US-A- 5 464 107

## Beschreibung

Die Erfindung betrifft einen Extrusionskopf zur Herstellung eines schlauchförmigen, mehrschichtigen Vorformlings aus erweichtem thermoplastischen Kunststoff mit wenigstens einem in Extrusionsrichtung verlaufenden Sichtstreifen aus transluzentem Material, mit wenigstens zwei Zufuhrwegen für die Zufuhr von plastifiziertem Kunststoff von mehreren Extrudern zu einer Ringkanalanordnung, mit einem sich an die Ringkanalanordnung gegebenenfalls unter Zwischenschaltung eines Ringspeicherraums anschließenden Ringspalt einer Ringspaltdüse und mit wenigstens einer in die Ringkanalanordnung mündenden Fließkanalbohrung zur Einbringung des Sichtstreifens.

Die Erfindung betrifft weiterhin ein Verfahren zur Extrusion eines schlauchförmigen, mehrschichtigen Vorformlings aus erweichtem thermoplastischen Kunststoff.

Ein Extrusionskopf der eingangs genannten Art ist beispielsweise aus der WO 98/08668 bekannt. Diese Druckschrift beschreibt einen fassartigen Behälter aus Kunststoff mit einem sich in dessen Wandung in axialer Richtung erstreckenden Sichtstreifen aus transluzentem Kunststoff sowie eine Vorrichtung zu dessen Herstellung.

Ein der eingangs genannten Art ähnlicher Extrusionskopf, bei dem aber die Fließkanalbohrung nicht in die Ringkanalanordnung sondern in den darauffolgenden Ringspalt mündet, ist in EP 0 575 039 A1 offenbart. Diese Druckschrift beschreibt einen Extrusionskopf zur Herstellung mehrerer schlauchförmiger mehrschichtiger Vorformlinge, mit dem nahezu identische Extrudate aus jeder einzelnen Extrusionsstation des Kopfes extrudiert werden können.

Des Weiteren wird ein Extrusionskopf ohne Ringspaltdüse, in WO 02/085602 A1 offenbart. Diese Druckschrift beschreibt ein Verfahren zur Herstellung eines säulenförmigen, ggf. mehrschichtigen Schmelzestroms, bei dem die extrudierte Säule aus Kunststoff in eine Hohlform mit vorbestimmtem Oberflächenprofil eingeführt wird. Die Säule ist hohl, um ggf. weitere Komponenten in die extrudierte Säule einzufügen. Des Weiteren wird ein positiver Luftdruck im Zentrum der Säule erzeugt, um die Säule vor dem Kollabieren zu schützen.

Ganz allgemein ist die Herstellung von Kunststoffbehältern im Extrusionsblasverfahren mit sich in deren Längsrichtung erstreckenden Sichtstreifen bekannt, und zwar sowohl bei einschichtig als auch bei mehrschichtig ausgebildeten Behältern. Bei einschichtig ausgebildeten extrusionsblasgeformten Behältern wird üblicherweise im Extrusionskopf über eine sich quer zur Extrusionsrichtung erstreckende Fließkanalbohrung ein Streifen aus andersfarbigem oder transluzentem Material eingespeist. Diese Einspeisung geht mit einer Auftrennung des Extrudats im Extrusionskopf einher. Stromabwärts der Einspeisestelle vereinigen sich die Teilströme wieder, wobei eine Verschweißung der Schmelze erfolgt.

Die axial verlaufenden Schweißnähte zwischen den verschiedenen Teilströmen des Extrudats sind Schwachstellen des fertigen Behältnisses, die bei kleinen und leichten Verpackungen durchaus in Kauf genommen werden können.

Nicht nur bei Kleinbehältnissen ist vielfach eine optische Füllstandskontrolle des Behälterinhaltes wünschenswert. Dies betrifft beispielsweise die sogenannten IBCs (Intermediate Bulk Container) und Fässer.

Die Kontrolle des Füllstandes des Füllgutes ist dann unproblematisch, wenn diese Behälter aus mehr oder minder durchscheinendem Material hergestellt sind. Oftmals ist es jedoch erforderlich, wie in der WO 98/08668 vorgeschlagen, solche fassartigen Behälter mit einer Einfärbung zu versehen, die beispielsweise dem Schutz gegen UV-Strahlung dient oder den Behälter als Schutz vor elektrostatischen Aufladungen elektrisch leitfähig machen soll. Solche Behälter werden üblicherweise mit einer mehrschichtigen Wandung hergestellt, wobei nur die äußere, in der Regel dünnere Schicht, mit einer Einfärbung versehen ist.

Um auch bei solchen Behältern eine optische Füllstandskontrolle zu gewährleisten, wird in der WO 98/08668 vorgeschlagen, nur in den äußeren eingefärbten Schichten des coextrudierten Behälters einen Sichtstreifen aus transluzentem Kunststoff vorzusehen. Dies hat insbesondere den Vorzug, dass eine Aufspaltung des Extrudats im Bereich der inneren, dem Behälter die Stabilität verleihenden Schicht während der Extrusion nicht erforderlich ist.

Zur Durchführung dieses bekannten Verfahrens wird in der WO 98/08668 die Verwendung eines Speicherkopfes mit einem sich trichterförmig erweiternden Ringspeicherraum vorgesehen. In dem Kolben des Speicherkopfes sind drei Ringverteiler vorgesehen, die jeweils an einen Extruder mit unterschiedlichen Kunststoffschmelzen angeschlossen sind. Die Ringverteiler münden in einen der Düse bzw. dem Düsenspalt vorgeschalteten Ringkanal, in welchem die Extrudate zusammengeführt werden. In diesen Ringkanal wird unterhalb der Einmündung aller Ringverteiler über eine Fließkanalbohrung die transluzente Kunststoffschmelze eingespeist, und zwar so, dass der Sichtstreifen nur die zwei äußeren der insgesamt drei Schichten des Coextrudats durchsetzt. Diese zwei äußersten Schichten bestehen aus einer äußeren eingefärbten Schicht und aus einer inneren Rezyclatschicht. Die Einspeisung erfolgt über einen Strömungskörper, der sich zumindest bis zu der die Innenschicht des Vorformlings bildenden Kunststoffschmelze erstreckt.

Die zuvor beschriebene Anordnung ist mit dem Nachteil behaftet, dass eine exakte Festlegung der Schichtgrenze des transluzenten Sichtstreifens in Bezug auf den dreischichtigen Aufbau des Extrudats nicht festlegbar ist. Um zu gewährleisten, dass die transluzente Kunststoffschmelze die beiden äußeren Schichten vollständig durchsetzt, ist es unter Umständen erforderlich, den Strömungskörper in Bezug auf die Längsachse des Extrusionskopfes radial einwärts gerichtet so zu platzieren, dass dieser, wenn auch nur geringfügig, auch von dem Extrudat der inneren Schicht umflossen wird. Dies bedeutet eine Wandstärkenverminderung der inneren in sich geschlossenen Schicht in diesem Bereich, die mit Stabilitätsverlust des Behälters einhergeht.

Erstreckt sich der Strömungskörper nicht vollständig durch beide äußeren Schichten, leidet darunter die Qualität des Sichtstreifens. Eine Erstreckung des Strömungskörpers exakt in die Trennebene zwischen der inneren und den äußeren Schichten wird kaum möglich bzw. eher zufällig sein. Die vorbeschriebene Ausgestaltung ist insbesondere dann nachteilig, wenn die Dicke der verschiedenen Schichten des Vorformlings verändert oder variiert werden soll. Dann muss jeweils eine Anpassung der Eintauchtiefe des Strömungskörpers erfolgen.

Der Erfindung liegt daher die Aufgabe zu Grunde, einen Extrusionskopf der eingangs genannten Art bereitzustellen, mit dem diese Nachteile vermieden werden.

Der Erfindung liegt weiterhin die Aufgabe zu Grunde, ein Extrusionsverfahren bereitzustellen, mit welchem ein mehrschichtiger Vorformling mit Sichtstreifen herstellbar ist, bei dem die Schichtgrenze des Sichtstreifens in Bezug auf die anderen Schichten exakt definierbar ist.

Die Aufgabe wird zunächst gelöst durch einen Extrusionskopf zur Herstellung eines schlauchförmigen, mehrschichtigen Vorformlings aus erweichtem thermoplastischem Kunststoff mit wenigstens einem in Extrusionsrichtung verlaufenden Sichtstreifen aus transluzentem Material, mit wenigstens zwei Zufuhrwegen für die Zufuhr von plastifiziertem Kunststoff von mehreren Extrudern zu einer Ringkanalanordnung, mit einem sich an die Ringkanalanordnung gegebenenfalls unter Zwischenschaltung eines Ringspeicherraums anschließenden Ringspalt einer Ringspaltdüse und mit wenigstens einer in die Ringkanalanordnung mündenden Fließkanalbohrung zur Einbringung des Sichtstreifens, wobei der Extrusionskopf sich dadurch auszeichnet, dass die Ringkanalanordnung konzentrisch zueinander angeordnete Ringkanäle umfasst, die voneinander getrennte Fließwege für die verschiedenen Schichten des Vorformlings bilden, und dass die Fließkanalbohrung stromaufwärts des Ringspalts und/oder des Ringspeicherraums im Bereich der Trennung der Fließwege in den betreffenden Ringkanal mündet.

Der Extrusionskopf gemäß der Erfindung bietet den Vorzug, dass sich der Sichtstreifen ohne Beeinträchtigung des die innere Tragschicht bildenden Extrudats so einspeisen lässt, dass er sich über die gesamte Stärke einer oder mehrerer äußerer Schichten erstreckt. Dies wird dadurch gewährleistet, dass die Fließkanalbohrung stromaufwärts des Ringspaltes, in dem die Teilströme des Extrudats zusammengeführt werden, in den Ringkanal mündet. Bei Zusammenführung der Extrudate im Bereich der Düse, d. h. im Bereich des Ringspalts, ist der Sichtstreifen schon in die äußere oder in die äußeren Schichten eingespeist. Vorzugsweise mündet die Fließkanalbohrung über einen Strömungsteiler in den Ringkanal. Der Strömungsteiler erstreckt sich über die gesamte Breite des betreffenden Ringkanals.

Insbesondere dann, wenn ein im Querschnitt dreischichtig aufgebauter Vorformling extrudiert werden soll, ist es zweckmäßig, wenn der Strömungsteiler in einem äußeren Ringkanal angeordnet ist, und zwar derart, dass er eine vollständige Aufteilung des diesen Ringkanal durchfließenden Extrudats in axialer Richtung bewirkt.

Bei einer bevorzugten Ausführungsform der Erfindung münden die Ringkanäle unmittelbar in den Ringspalt der Ringspaltdüse.

Alternativ kann vorgesehen sein, dass dem Ringspalt ein Ringspeicherraum vorgeschaltet ist und dass die Ringkanalanordnung als Teil eines Ringkolbens ausgebildet ist.

Mit anderen Worten, der Extrusionskopf kann als Speicherkopf zur diskontinuierlichen Extrusion als auch als Extrusionskopf zur kontinuierlichen Extrusion ausgebildet sein.

Die Ringkanalanordnung kann wenigstens drei Ringkanäle umfassen, nämlich einen inneren und zwei äußere, wobei die äußeren Ringkanäle stromaufwärts der Mündung des inneren Ringkanals in der Ringspaltdüse zusammengeführt sind.

Die der Erfindung zu Grunde liegende Aufgabe wird weiterhin durch ein Verfahren zur Extrusion eines schlauchförmigen, mehrschichtigen Vorformlings aus erweichtem thermoplastischem Kunststoff mit wenigstens einem in Extrusionsrichtung verlaufenden Streifen aus andersartigem Kunststoff gelöst, wobei in einem Extrusionskopf mehrere Schichten des Kunststoffs über einen Teil des Extrusionswegs konzentrisch zueinander über voneinander getrennte Fließwege geführt werden und wobei der Streifen in eine äußere Schicht stromaufwärts der Zusammenführung der coextrudierten Teilströme eingespeist wird.

Vorzugsweise wird als Streifen andersartigen Materials ein Sichtstreifen aus transluzentem Kunststoff eingespeist. Unter transluzent im Sinne der Erfindung können sowohl schwach durchscheinend als auch klarsichtige Materialien zu verstehen sein.

Bei der bevorzugten Variante des erfindungsgemäßen Verfahrens werden eine innere Tragschicht und zwei äußere Deckschichten coextrudiert, wobei der Streifen so eingespeist wird, dass er nur die Deckschichten zumindest teilweise durchsetzt. Zumindest teilweise im Sinne der Erfindung heißt, dass beispielsweise bei mehreren Deckschichten nur diejenige von dem Sichtstreifen durchsetzt wird, die eingefärbt ist, d. h. die äußerste.

Die Erfindung wird nachstehend anhand eines in den Zeichnungen dargestellten Ausführungsbeispiels erläutert.

Es zeigen:
- Figur 1: den Extrusionskopf gemäß der Erfindung, teilweise im Schnitt,
- Figur 2: eine perspektivische Ansicht des Strömungsteilers,
- Figur 3: einen Schnitt durch den Extrusionskopf entlang der Linie III-III in Figur 1,
- Figur 4: einen Schnitt durch den Extrusionskopf entlang der Linien IV-IV in Figur 1 und
- Figur 5: einen Schnitt durch einen Extrusionskopf gemäß einem zweiten Ausführungsbeispiel der Erfindung.

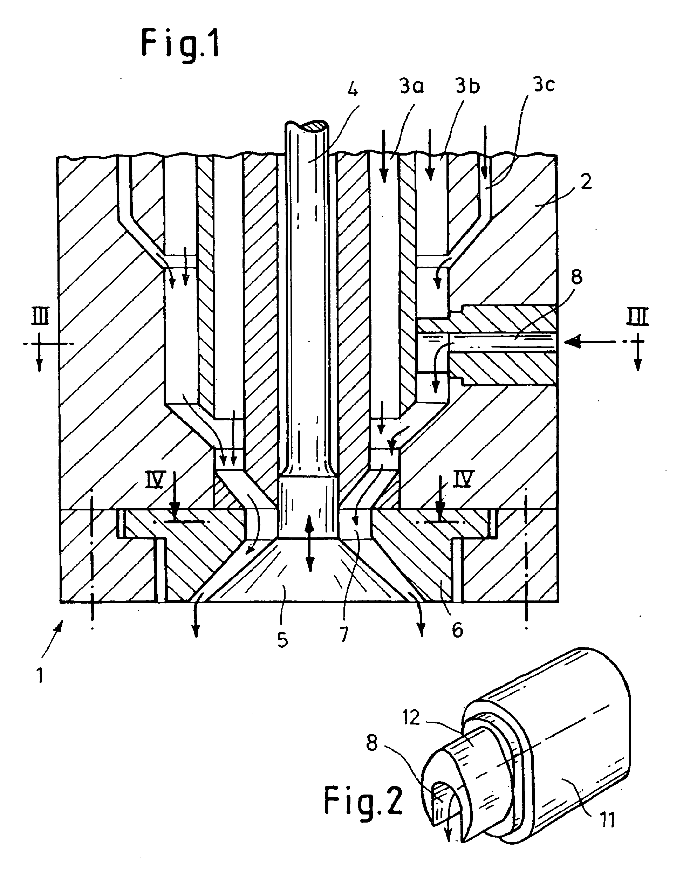

Figur 1 zeigt eine teilweise geschnittene Teilansicht des Extrusionskopfes 1 gemäß der Erfindung. Dieser besteht in bekannter Art und Weise aus einem Gehäuse 2, einer in dem Gehäuse ausgebildeten Ringkanalanordnung, umfassend einen inneren Ringkanal 3a und zwei äußere Ringkanäle 3b und 3c, die jeweils aus verschiedenen, nicht dargestellten Extrudern gespeist werden, einem Dorn 4 mit Düsenpilz 5 sowie einem Düsenmantel 6, der mit dem Düsenpilz 5 zusammen einen verstellbaren Ringspalt 7 bildet. Der Dorn 4 ist axial verstellbar, mit diesem auch der Düsenpilz 5 innerhalb des Düsenmantels 6, wodurch letztendlich die Spaltbreite des Ringspaltes 7 in dem sich konisch erweiternden Düsenbereich während der Extrusion nach einem vorgegebenen Wanddickenprogramm einstellbar ist.

Die Fließwege des durch den Extrusionskopf 1 hindurchtretenden erweichten Extrudats sind in Figur 1 mit Pfeilen dargestellt. In Fließrichtung des Extrudats betrachtet werden zunächst die Ringkanäle 3b und 3c zusammengeführt, weiter stromabwärts bei Eintritt in den Ringspalt 7 werden dann die vereinigten Teilströme 3b, 3c einerseits und der Teilstrom 3a zusammengeführt. Durch den Ringkanal 3a wird das die innere Tragschicht des Vorformlings bildende Extrudat geführt.

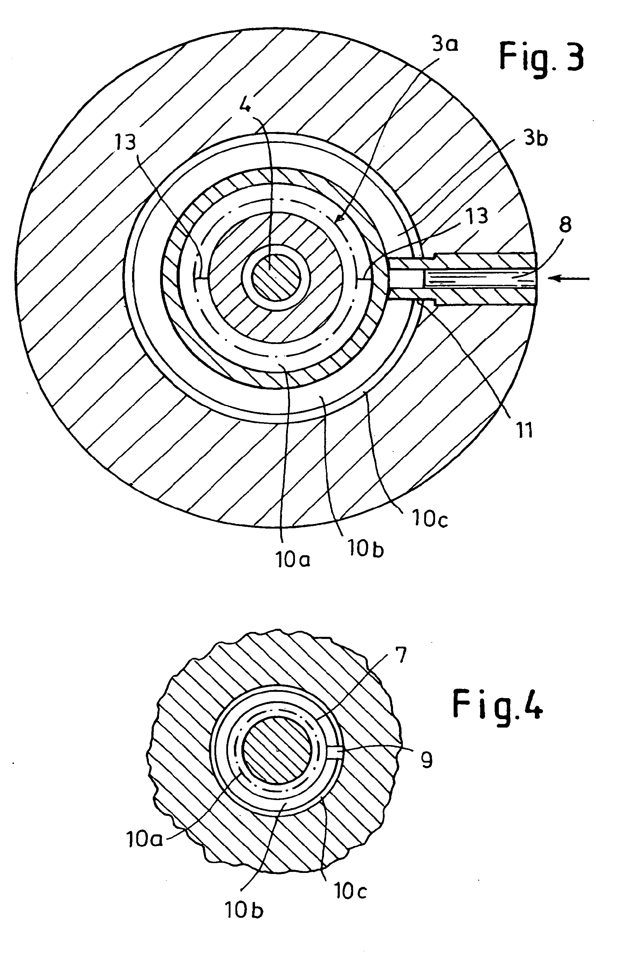

In den Ringkanal 3b mündet eine sich quer zur Extrusionsrichtung erstreckende Fließkanalbohrung 8, über die ein transluzenter Kunststoffstreifen in den Ringkanal 3b stromabwärts der Mündung des Ringkanals 3c eingespeist wird. Der Streifen erstreckt sich über die gesamte Dicke und in Umfangsrichtung betrachtet über einen kleinen Kreisbogenabschnitt, der in den Figuren 3 und 4 mit 10b und 10c bezeichneten äußeren Schichten des Extrudats. Mit 10a ist die Tragschicht des Extrudats bezeichnet. Wie insbesondere der Figur 1 zu entnehmen ist, wird der Streifen 9 stromabwärts der Zusammenführung der Schichten 10b und 10c bzw. der Zusammenführung der Ringkanäle 3b und 3c eingespeist.

Die Fließkanalbohrung 8 erstreckt sich in einen Strömungsteiler 11, dessen dachförmiger Fortsatz 12 oberhalb der Mündung der Fließkanalbohrung 8 eine Auftrennung der Schichten 10b und 10c bewirkt.

Bei dem dargestellten Ausführungsbeispiel besteht die Tragschicht 10a aus nicht eingefärbtem Kunststoff, die Schicht 10b aus einem Rezyclat, d. h. aus aufbereitetem Butzenmaterial und die Schicht 10c aus einem beispielsweise mit Ruß gefüllten und somit eingefärbten Kunststoff. Das Rezyklat ist ebenfalls nicht klarsichtig.

Wie in den Figuren 3 und 4 andeutungsweise dargestellt ist, ist die Tragschicht 10 ihrerseits aus zwei Schmelzeströmen zusammengesetzt, die jedoch aus dem gleichen Extruder gespeist werden. Dies ergibt sich daraus, dass der in den Figuren nicht dargestellte Dornhalter beispielsweise mit zwei um 180° versetzten herzkurvenförmigen Führungen für die Schmelze versehen ist, so dass sich zwei schlauchartige Ströme bilden, deren mit 13 bezeichneten Zusammenflussstellen jeweils diametral gegenüberliegend angeordnet sind und die jeweils von einem nicht aufgeteilten Schmelzestrang überlappt werden. Dies verleiht dieser Schicht eine hohe Festigkeit am Fertigteil.

Wie dem Fachmann bekannt ist, ist die Aufteilung des Schmelzestroms bei Extrusionsköpfen mit Dornhalter (Axial-Angussköpfen) nicht vermeidbar. Bei Radial-Angussköpfen ist ebenfalls die Erzeugung einer Nahtstelle bei Umfließen des Dorns oder der Pinole durch die Schmelze unvermeidbar.

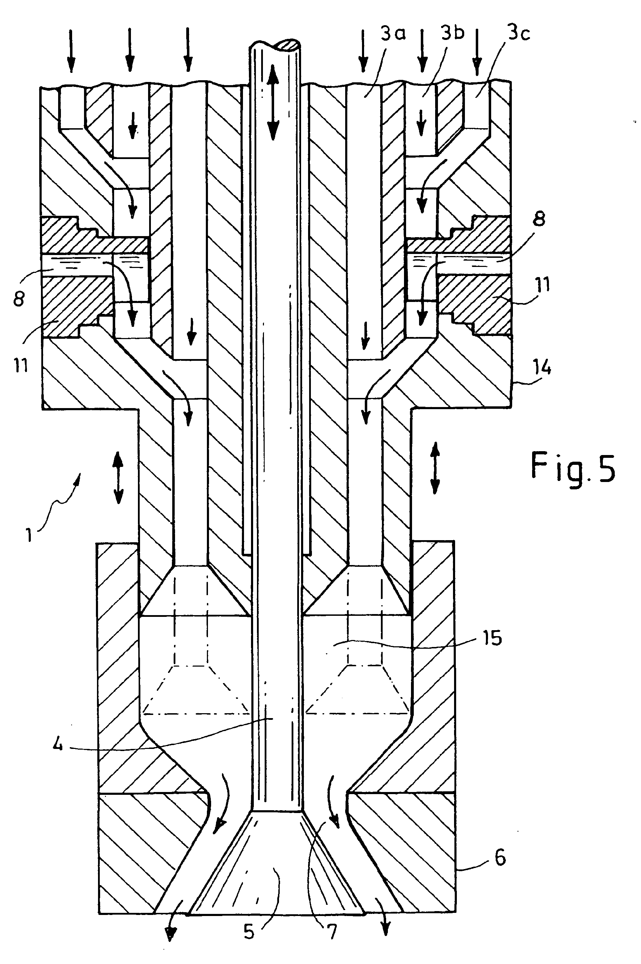

Bei dem in Figur 5 dargestellten Ausführungsbeispiel der Erfindung ist der Extrusionskopf 1 als Speicherkopf ausgebildet, bei dem die Ringkanalanordnung Teil eines Ringkolbens 14 ist, der den oberen Abschluss eines Ringspeicherraums 15 bildet. Die Figur 5 zeigt den Ringkolben 14 im ausgefahrenen Zustand. Das aus den Ringkanälen 3a, b, c austretende Extrudat tritt zunächst in den Ringspeicherraum 15 ein und bewirkt dort eine Druckerhöhung, die eine Aufwärtsbewegung des Ringkolbens 14 erzeugt. Während dieses Zyklus ist erforderlichenfalls die Ringspaltdüse geschlossen. Der Extruder fördert in den Ringspeicherraum 15. Ist der Ringspeicherraum 15 gefüllt, wird über eine Axialverschiebung des Ringkolbens 14 der Ringspeicherraum 15 bei geöffneter Extrusionsdüse aktiv entleert, wobei währenddessen die Extruder weiterbetrieben werden. Diese Vorgänge sind hinlänglich bekannt und sind hier nur der Vollständigkeit halber beschrieben. Weiterhin sind bei dem in Figur 5 dargestellten Ausführungsbeispiel zwei diametral gegenüberliegend angeordnete Fließkanalbohrungen 8 zur Erzeugung zweier Streifen 9 vorgesehen. Im Übrigen sind bei dem in Figur 5 dargestellten Ausführungsbeispiel dem ersten Ausführungsbeispiel entsprechende Bauteile mit gleichen Bezugszeichen versehen.

### Bezugszeichenliste

- 1: Extrusionskopf
- 2: Gehause
- 3a, b, c: Ringkanäle
- 4: Dorn
- 5: Dusenpilz
- 6: Dusenmantel
- 7: Ringspalt
- 8: Fließkanalbohrung
- 9: Streifen
- 10b, c: außere Schichten
- 10a: Tragschicht
- 11: Stromungsteiler
- 12: Fortsatz
- 13: Zusammenflussstellen
- 14: Ringkolben
- 15: Ringspeicherraum

## Patentansprüche

1. Extrusionskopf zur Herstellung eines schlauchförmigen, mehrschichtigen Vorformlings aus erweichtem thermoplastischen Kunststoff mit wenigstens einem in Extrusionsrichtung verlaufenden Sichtstreifen aus transluzentem Material, mit wenigstens zwei Zufuhrwegen für die Zufuhr von plastifiziertem Kunststoff von mehreren Extrudern zu einer Ringkanalanordnung, mit einem sich an die Ringkanalanordnung gegebenenfalls unter Zwischenschaltung eines Ringspeicherraums anschließenden Ringspalt einer Ringspaltdüse und mit wenigstens einer in die Ringkanalanordnung mündenden Fliesskanalbohrung zur Einbringung des Sichtstreifens, wobei die Ringkanalanordnung konzentrisch zueinander angeordnete Ringkanäle (3a, b, c) umfasst, die voneinander getrennte Fliesswege für die verschiedenen Schichten (10a, b, c) des Vorformlings bilden, **dadurch gekennzeichnet, dass** die Fliesskanalbohrung (8) stromaufwärts des Ringspalts (7) und/oder eines Ringspeicherraums (15) im Bereich der Trennung der Fliesswege in den betreffenden Ringkanal (3b) mündet.

2. Extrusionskopf nach Anspruch 1, **dadurch gekennzeichnet, dass** die Fliesskanalbohrung (8) über einen Strömungsteiler (11) in den Ringkanal (3b) mündet.

3. Extrusionskopf nach Anspruch 2, **dadurch gekennzeichnet, dass** der Strömungsteiler (11) in einem äußeren Ringkanal (3b) angeordnet ist und zwar derart, dass er eine vollständige Aufteilung des diesen Ringkanal durchfließenden Extrudats in axialer Richtung bewirkt.

4. Extrusionskopf nach einem der Ansprüche 1 bis 3, **dadurch gekennzeichnet, dass** die Ringkanäle (3a, b, c) unmittelbar in den Ringspalt (7) der Ringspaltdüse münden.

5. Extrusionskopf nach einem der Ansprüche 1 bis 3, **dadurch gekennzeichnet, dass** dem Ringspalt (7) ein Ringspeicherraum (15) vorgeschaltet ist und dass die Ringkanalanordnung als Teil eines Ringkolbens (14) ausgebildet ist.

6. Extrusionskopf nach einem der Ansprüche 1 bis 5, **dadurch gekennzeichnet, dass** die Ringkanalanordnung drei Ringkanäle (3a, b, c) umfasst, nämlich einen inneren (3a) und zwei äußere (3b, c), wobei die äußeren Ringkanäle (3b, c) stromaufwärts der Mündung des inneren Ringkanals (3a) in die Ringspaltdüse zusammengeführt sind.

7. Verfahren zur Extrusion eines schlauchförmigen, mehrschichtigen Vorformlings aus erweichtem thermoplastischen Kunststoff mit wenigstens einem in Extrusionsrichtung verlaufenden Streifen aus andersartigem Kunststoff, wobei in einem eine Ringspaltdüse aufweisenden Extrusionskopf mehrere Schichten des Kunststoffs über einen Teil des Extrusionsweges konzentrisch zueinander über voneinander getrennte Fliesswege geführt werden und **dadurch gekennzeichnet, dass** der Streifen in eine äußere Schicht stromaufwärts der Zusammenführung der coextrudierten Teilströme eingespeist wird.

8. Verfahren nach Anspruch 7, **dadurch gekennzeichnet, dass** als Streifen andersartigen Materials ein Sichtstreifen aus transluzentem Kunststoff eingespeist wird.

9. Verfahren nach einem der Ansprüche 7 oder 8, **dadurch gekennzeichnet, dass** eine innere Tragschicht (10a) und zwei äußere Deckschichten (10b, c) coextrudiert werden und dass der Streifen (9) so eingespeist wird, dass er nur die Deckschichten (10b, c) zumindest teilweise durchsetzt.

10. Verfahren nach einem der Ansprüche 7 bis 9, **dadurch gekennzeichnet, dass** der Vorformling kontinuierlich extrudiert wird.

11. Verfahren nach einem der Ansprüche 7 bis 9, **dadurch gekennzeichnet, dass** der Vorformling diskontinuierlich extrudiert wird.

## Claims

1. Extrusion head for producing a tube-shaped, multilayer preform from softened thermoplastic plastic with at least one viewing strip made of translucent material and extending in the direction of extrusion, said extrusion head having at least two supply paths for supplying plasticized plastic from a number of extruders to an annular-duct arrangement, having an annular gap belonging to an annular-gap nozzle and adjoining the annular-duct arrangement, optionally with the interposition of an annular storage chamber, and having at least one flow-duct bore, which opens into said annular-duct arrangement, for introducing the viewing strip, wherein the annular-duct arrangement comprises annular ducts (3a, b, c) which are arranged concentrically with one another and form flow paths, which are separated from one another, for the various layers (10a, b, c) of the preform, **characterised in that** the flow-duct bore (8) opens, upstream of the annular gap (7) and/or of an annular storage chamber (15), into the relevant annular duct (3b) in the region of the separation of the flow paths.

2. Extrusion head according to claim 1, **characterised in that** the flow-duct bore (8) opens into the annular duct (3b) via a flow-divider (11).

3. Extrusion head according to claim 2, **characterised in that** the flow-divider (11) is arranged in an outer annular duct (3b), namely in such a way that it brings about the complete dividing-up of the extrudate flowing through the said annular duct in the axial direction.

4. Extrusion head according to one of claims 1 to 3, **characterised in that** the annular ducts (3a, b, c) open directly into the annular gap (7) of the annular-gap nozzle.

5. Extrusion head according to one of claims 1 to 3, **characterised in that** an annular storage chamber (15) is incorporated upstream of the annular gap (7), and that the annular-duct arrangement is constructed as part of an annular piston (14).

6. Extrusion head according to one of claims 1 to 5, **characterised in that** the annular-duct arrangement comprises three annular ducts (3a, b, c), namely an inner one (3a) and two outer ones (3b, c), the outer annular ducts (3b, c) being brought together upstream of the opening of the inner annular duct (3a) into the annular-gap nozzle.

7. Method of extruding a tube-shaped, multilayer preform from softened thermoplastic plastic with at least one strip made of a different kind of plastic and extending in the direction of extrusion, wherein a number of layers of the plastic are guided concentrically with one another, within an extrusion head having an annular-gap nozzle, over part of the extrusion path via flow paths which are separated from one another, and **characterised in that** the strip is fed into an outer layer upstream of the bringing-together of the co-extruded partial flows.

8. Method according to claim 7, **characterised in that** a viewing strip made of translucent plastic is fed in as the strip of a different kind of material.

9. Method according to either of claims 7 or 8, **characterised in that** an inner carrier layer (10a) and two outer covering layers (10b, c) are co-extruded, and that the strip (9) is fed in in such a way that it passes, at least partly, only through the covering layers (10b, c).

10. Method according to one of claims 7 to 9, **characterised in that** the preform is extruded in a continuous manner.

11. Method according to one of claims 7 to 9, **characterised in that** the preform is extruded in a discontinuous manner.

## Revendications

1. Tête d'extrusion pour la réalisation d'une paraison multicouche en forme de tuyau flexible en matière plastique thermoplastique amollie avec au moins une bande de visualisation en matériau translucide, orientée dans la direction d'extrusion, comportant au moins deux voies d'acheminement pour amener la matière plastique plastifiée de plusieurs extrudeuses vers un système de canaux annulaires, comportant une fente annulaire d'une filière à fente annulaire, dans le prolongement du système de canaux annulaires avec, le cas échéant, une chambre de retenue annulaire intercalée, et comportant, pour l'introduction de la bande de visualisation, au moins une forure formant un canal de circulation, débouchant dans le système de canaux annulaires, ledit système de canaux annulaires comportant des canaux annulaires (3a, b, c) qui sont disposés concentriquement les uns aux autres et forment des voies de circulation séparées les unes des autres pour les différentes couches (10a, b, c) de la paraison, **caractérisée en ce que** la forure (8) formant un canal de circulation débouche, en amont de la fente annulaire (7) et/ou d'une chambre de retenue annulaire (15), dans le canal annulaire (3b) concerné dans la zone de séparation des voies de circulation.

2. Tête d'extrusion selon la revendication 1, **caractérisée en ce que** la forure (8) formant un canal de circulation débouche dans le canal annulaire (3b) via un séparateur de flux (11).

3. Tête d'extrusion selon la revendication 2, **caractérisée en ce que** le séparateur de flux (11) est disposé dans un canal annulaire (3b) extérieur de manière à produire dans la direction axiale une séparation totale de l'extrudat circulant dans ledit canal annulaire.

4. Tête d'extrusion selon l'une quelconque des revendications 1 à 3, **caractérisée en ce que** les canaux annulaires (3a, b, c) débouchent directement dans la fente annulaire (7) de la filière à fente annulaire.

5. Tête d'extrusion selon l'une quelconque des revendications 1 à 3, **caractérisée en ce qu'**une chambre de retenue annulaire (15) est montée en amont de la fente annulaire (7), et **en ce que** le système de canaux annulaires est réalisé comme une partie d'un piston annulaire (14).

6. Tête d'extrusion selon l'une quelconque des revendications 1 à 5, **caractérisée en ce que** le système de canaux annulaires comporte trois canaux annulaires (3a, b, c), à savoir un canal annulaire intérieur (3a) et deux canaux annulaires extérieurs (3b, c), lesdits deux canaux annulaires extérieurs (3b, c) convergeant en amont de l'embouchure du canal annulaire intérieur (3a) dans la filière à fente annulaire.

7. Procédé pour l'extrusion d'une paraison multicouche en forme de tuyau flexible en matière plastique thermoplastique amollie avec au moins une bande orientée dans la direction d'extrusion et réalisée dans un autre type de matière plastique, plusieurs couches de la matière plastique étant guidées, dans une tête d'extrusion munie d'une filière à fente annulaire, concentriquement les unes aux autres sur une partie de la voie d'extrusion dans des voies de circulation séparées les unes des autres, et **caractérisé en ce que** la bande est introduite dans une couche extérieure en amont du point de convergence des flux partiels coextrudés.

8. Procédé selon la revendication 7, **caractérisé en ce que** l'on introduit une bande de visualisation en matière plastique translucide, formant la bande réalisée dans un autre type de matière plastique.

9. Procédé selon la revendication 7 ou 8, **caractérisé en ce qu'**une couche support (10a) intérieure et deux couches de recouvrement (10b, c) extérieures sont coextrudées, et **en ce que** la bande (9) est introduite de telle sorte qu'elle traverse seulement partiellement les couches de recouvrement (10b, c).

10. Procédé selon l'une quelconque des revendications 7 à 9, **caractérisé en ce que** la paraison est extrudée en continu.

11. Procédé selon l'une quelconque des revendications 7 à 9, **caractérisé en ce que** la paraison est extrudée en discontinu.
